# EUROPEAN PATENT SPECIFICATION

(11) **EP 0 970 581 B1**
(45) Date of publication and mention of the grant of the patent: **12.02.2003**
(21) Application number: 98915157.6
(22) Date of filing: 20.03.1998
(51) Int. Cl.: H04N 5/913

(54) **METHOD FOR DETECTING MODIFIED COLOR BURST SIGNALS TO PREVENT THE COPYING OF A VIDEO PROGRAM**
VERFAHREN ZUR ERKENNUNG EINES MODIFIZIERTEN FARBBURSTSIGNALS ZUR KOPIERVERHINDERUNG EINES VIDEOPROGRAMMS
PROCEDE DE DETECTION DES SIGNAUX DE RAFALE CHROMATIQUE MODIFIES POUR EMPECHER LA COPIE DE PROGRAMMES VIDEO

(30) Priority: 21.03.1997 US 40832
(43) Date of publication of application: 12.01.2000
(73) Proprietor: MACROVISION CORPORATION, Sunnyvale, CA 94089 (US)
(72) Inventor: BRILL, Gerow, D., Mountain View, CA 94040 (US); RYAN, John, O., Cupertino, CA 95014 (US)
(74) Representative: Needle, Jacqueline
(86) International application number: US9805798
(87) International publication number: WO98043420

(56) References cited:
- EP-A- 0 256 753
- WO-A-96/36174
- WO-A-97/26759
- US-A- 4 626 890

## Description

The present invention relates to a method for processing a video signal to prevent the making of video recordings therefrom.

Specifically, the invention relates to a method in which a single television line of a video signal is detected to cause disabling of a video recording device.

There are various known techniques for modifying a video signal such that a normal colour picture is produced by a television receiver receiving the modified video signal, but such that video recording of the modified video signal is impaired. That is, a video picture produced from the video signal as recorded on a video tape recorder is altered so that it makes unacceptable viewing.

US-A-4631603 describes adding ordered pairs of pseudo-sync pulses and white pulses during the vertical blanking interval. The pulse pairs act in concert to confuse the automatic gain system of a video cassette recorder (VCR), leading to generally unviewable pictures. US-A-4907093 discloses a method and apparatus for detecting the ordered pairs of pseudo-sync pulses and white pulses and disabling the recording function of a video cassette recorder.

US-A-4577216 describes an alternative method of modifying a colour video signal to inhibit the making of acceptable video recordings thereof. The colour picture resulting from a video tape recording shows variations in the colour fidelity that appear as bands or stripes of colour error. Colloquially the modifications are referred to as the "Colorstripe™" system or process.

Colour video signals (both in the NTSC and PAL colour television standard systems) include what is called a colour burst. The Colorstripe™ system modifies the colour burst. The suppression of the colour subcarrier signal at the television (TV) transmitter requires that the colour TV receiver include (in NTSC) a 3.58 MHz oscillator which is used during demodulation to reinsert the colour subcarrier signal and restore the colour signal to its original form. Both the frequency and phase of this reinserted subcarrier signal are critical for colour reproduction. Therefore, it is necessary to synchronize the colour TV receiver's local 3.58 MHz oscillator so that its frequency and phase are in step with the subcarrier signal at the transmitter.

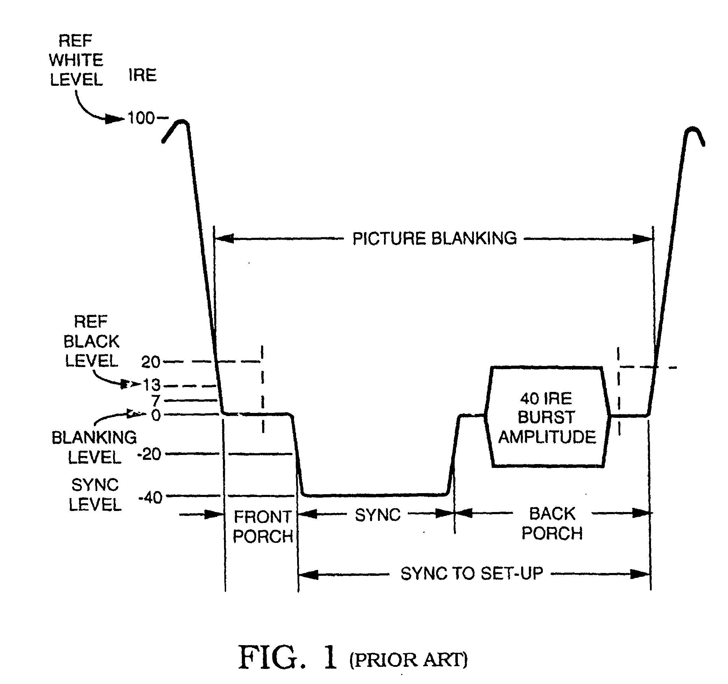

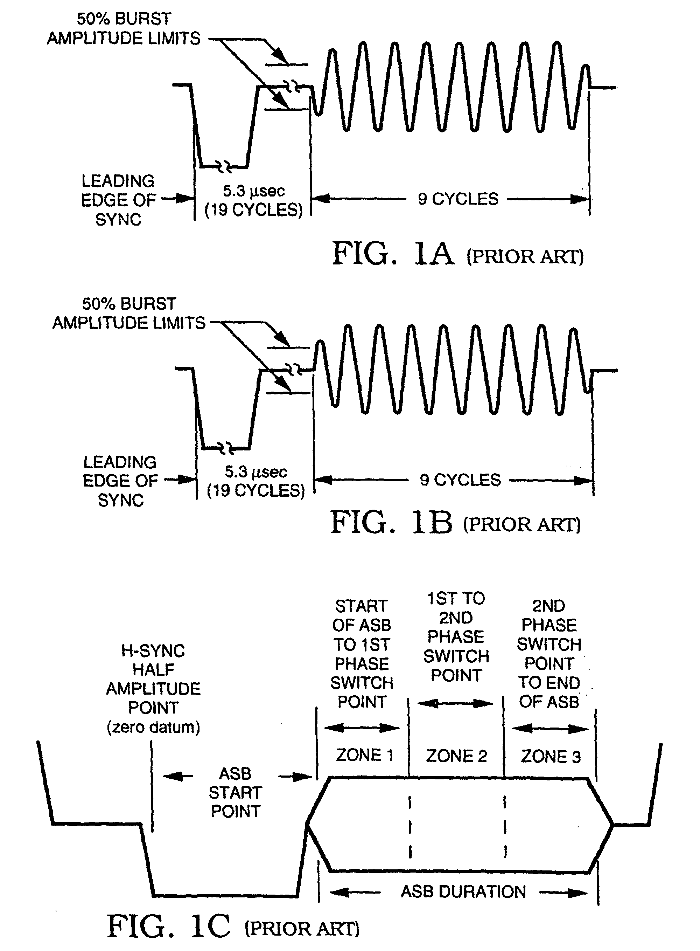

This synchronization is accomplished by transmitting a small sample of the transmitter's 3.58 MHz subcarrier signal during the back porch interval of the horizontal blanking pulse. FIG. 1 shows one horizontal blanking interval of an NTSC colour signal. The horizontal sync pulse, the front porch and blanking interval duration are essentially the same as that for black and white TV. However, during colour TV transmission (both broadcast and cable) 8 to 10 cycles of the 3.58 MHz subcarrier that is to be used as the colour sync signal are superimposed on the back porch. This colour sync signal is referred to as the "colour burst" or "burst". The colour burst peak-to-peak amplitude (40 IRE for NTSC TV as shown) is the same amplitude as the horizontal sync pulse.

FIG. 1A shows an expanded view of a part of the waveform of FIG. 1 including the actual colour burst cycles. During the colour TV blanking intervals, such a colour burst is transmitted following each horizontal sync pulse.

In one commercial embodiment of the Colorstripe™ process, no colour burst phase (stripe) modification appears in the video lines that have a colour burst signal during the vertical blanking interval. These are lines 10 to 21 in an NTSC signal and corresponding lines in a PAL signal. The colour burst modifications occur in bands of four to five video lines of the viewable TV field followed by bands of eight to ten video lines without the colour burst modification. The location of the bands is fixed ("stationary") field-to-field. This Colorstripe™ process has been found to be quite effective for cable television, especially when combined with the process described in US-A-4631603.

In NTSC TV, the start of colour burst is defined by the zero-crossing (positive or negative slope) that precedes the first half cycle of subcarrier (colour burst) that is 50% or greater of the colour burst amplitude. It is to be understood that the Colorstripe™ process shifts the phase of the colour burst cycles relative to their nominal (correct) position, illustrated for example in FIG. 1A. An example of a phase shifted colour burst is shown in FIG. 1B. The amount of phase shift shown in FIG. 1B is 180° (the maximum possible) over the entire colour burst.

Further, the amount of phase shift in the Colorstripe™ process can vary from e.g. 20° to 180°; the more phase shift, the greater the visual effect in terms of colour shift. In a Colorstripe™ process for PAL TV, a somewhat greater phase shift (e.g. 40° to 180°) is used to be effective.

FIG. 1C illustrates a colour burst signal which is partially modified, that is, is partially phase shifted, to prevent making a recording of the associated video signal. In an exemplary NTSC embodiment, a system called Advanced Switched Burst (ASB) has the capability of programming various combinations of partially modified colour burst signals. FIG. 1C illustrates one of such combinations, by way of example only, wherein the colour burst envelope comprises three zones. Zone 1 (burst start) begins 4.96 microseconds (µsecs) after the leading edge of horizontal sync. Zone 1 ends 1.48 µsecs after normal burst start. Zone 2 begins and ends at the end of Zone 1. In this particular embodiment, there is no Zone 2 per se. Zone 3 begins after the Zone 2 point and extends 1.48 µsecs to the end of burst. Therefore, in this particular embodiment, the colour burst has a width of 4.96 µsecs. The Zone 1 area will contain modified (inverted 180°) subcarrier. Normal phase subcarrier is used in Zone 2 (zero duration) and Zone 3.

Although three zones are illustrated in FIG. 1C by way of example, the colour burst may be partially phase shifted using other numbers of zones, e.g. two, etc., and phase shifting may be applied to various ones of the zones.

WO-A-96/36174 and US-A-4626890 describe methods for defeating the effects of the colour burst modifications.

The present invention seeks to prevent the recording of selected video signals.

According to a first aspect of the present invention, there is provided a method for processing a video signal to prevent the making of video recordings therefrom, wherein the video signal has unmodified colour burst signals and a colour burst signal containing a modified phase relationship in selected television lines, said method comprising the steps of: receiving the video signal with the modified colour burst signal; detecting the absence or presence of the modified colour burst signal in the television lines within a time window which encompasses the colour burst signal; generating a control signal indicating the absence or presence of the modified colour burst signal in said lines of the video signal; disabling the recording device to prevent recording of television lines of the video signal when the control signal indicates the presence of the modified colour burst in the respective modified line of the video signal; and enabling the recording device to allow recording of television lines when the control signal indicates the absence of the modified colour burst signal in the respective unmodified line of the video signal.

In an embodiment of the invention, the recording device is disabled when the respective modified colour burst signal is detected, and unmodified signals correspondingly result in the recording device being enabled, so that the video signal may be recorded.

Thus, a phase shifted, colour burst signal on even one line of the video signal will disable the recording device and prevent recording of that line whereby an acceptable recording of the modified video signal is prevented.

In an embodiment, the disabling means includes means for generating a timing window which encompasses the time duration of the back porch interval and thus of the colour burst signal. The video signal, modified or unmodified, is supplied to a phase lock loop circuit only during the presence of the colour burst signal. A colour burst signal which is modified by being partially or entirely phase shifted causes a voltage to be produced by the phase lock loop circuit which is different than the voltage produced when an unmodified colour burst signal is supplied to the phase lock loop circuit. Every television line is checked to determine if any line is modified. Since the detection process is limited by the window generator to the interval during which only the colour burst signal is present, the phase lock loop circuit cannot respond to active video or to other non-colour burst signals. The voltage difference between a modified and unmodified television line is sampled and used to respectively disable or enable the recording device.

The present invention also extends to a method for processing a video signal having an unmodified colour burst signal on selected television lines and a modified colour burst signal on selected lines in a field of the video signal, the method comprising the steps of: phase detecting the colour burst signal of a single television line of the video signal; generating a voltage difference indicative of the presence of the modified colour burst signal on said television line; sampling the voltage difference to distinguish if the line contains the unmodified colour burst signals or the modified colour burst signal; prohibiting a recording of the modified television line in the field on a recording device in response to the sampled voltage being indicative of the presence of a modified colour burst signal; and enabling a recording of the unmodified television line in the field on the recording device in response to the sampled voltage being indicative of the presence of an unmodified colour burst signal.

Embodiments of the present invention will hereinafter be described, by way of example, with reference to the accompanying drawings, in which
FIG. 1 is a waveform of a conventional horizontal blanking interval of a NTSC colour television standard signal;
FIGS. 1A, 1B and 1C are waveform diagrams of a horizontal blanking interval, including conventional and modified colour burst signals, respectively, of a NTSC colour television signal;
FIG. 2 is a simplified block diagram of a system configured with a disabler means to illustrate a method of the invention; and
FIG. 3 is a block diagram illustrating an embodiment of the disabler means of FIG. 2.

Even though commercial embodiments of the colour burst modifications described above are generally well known, any detection circuitry must be capable of detecting any colour burst modification type. Additionally, the detection circuitry cannot be dependent upon knowledge of which particular lines, or in how many lines, the colour burst modification may appear. For example, many times the Colorstripe™ process is not fixed in line location. Other times, even where it is so fixed, it is not desired or possible to provide the pre-programmed memory required to detect any combination of Colorstripe™ line locations and numbers. A method of an embodiment of the invention detects, for each video line, the presence of a modified colour burst; that is, colour bursts on a line or any combination of lines having induced phase modulation are detected.

In an embodiment of a method of the invention, a phase detection means which includes a subcarrier regeneration circuit such as a phase lock loop, crystal filter or frequency multiplier circuit, is used for determining the phase of the colour burst. This detected phase is compared to a nominal phase (using a phase comparison) and provides an indicator signal when a modified colour burst is present, i.e. when the colour burst phase has been modified to deviate from the normal correct phase. This indicator or control signal is used to disable the recorder's recording circuit in the presence of the colour burst phase modifications.

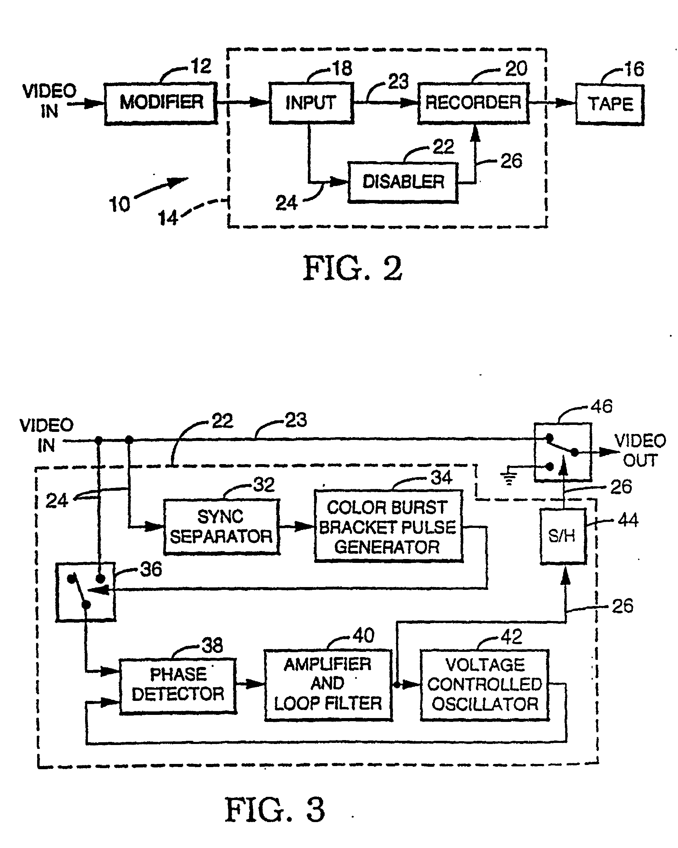

Referring initially to FIG. 2, a system for preventing the copying of a video program is shown generally at 10. A conventional video signal with or without a modified colour burst signal is supplied to video signal modifier 12. Modifier 12 may be an apparatus as described in US-A-4577216, for example. The modifier 12 supplies the video signal, with or without a modified colour burst signal, to an apparatus 14 which includes an input 18, a recording device 20 and a disabling means or apparatus 22. The input 18 supplies the modified or unmodified video signal to the recording device 20 via a bus 23, and to the disabling circuit 22 via a bus 24. The disabling apparatus 22 detects the presence or absence of a modified colour burst signal in each video line of the video signal, and supplies a control signal to the recorder device 20 via a lead 26. The control signal then is used to disable or enable the recording device to prevent or allow a recording to be made of the video signal on a recording tape or medium 16.

A specific embodiment of the disabling apparatus 22 to detect a modified colour burst signal and disable the record function is illustrated in FIG. 3. A video signal containing (or not containing) a modified colour burst signal, is supplied to the recording device 20 via the video bus 23 and to the apparatus 22 via the video bus 24. This modified (or unmodified) video signal is coupled to a sync separator 32 via the bus 24 to separate the synchronizing pulses from the video signal. The synch separator 32, suitable circuits for which are generally known, generates synchronizing pulses from the incoming video signal. The extracted synchronizing signals are coupled to a window generator or colour burst bracket pulse generator 34. The trailing edges of the sync pulses trigger the colour burst bracket pulse generator 34, which in its simplest form can simply be a monostable multivibrator of at least 3 µsecs duration. The width of the colour burst bracket pulse or window is equal to the back porch period of the horizontal blanking interval, illustrated for example in FIG. 1. If necessary, the colour burst bracket pulse may be made wider than normal colour burst widths in order to detect the colour burst modifications.

The output of the colour burst bracket generator 34 is coupled to the control element of a switch 36. The switch 36 couples the video input signal containing a modified (or unmodified) video signal to the input of a phase detector 38 only during the back porch period. This prevents a subsequent phase lock loop system comprising the phase detector 38, an amplifier and loop filter 40 and a voltage controlled oscillator 42, from being controlled by or responding to active video or other non-colour burst signals.

The output of the phase detector 38 is coupled to the amplifier and loop filter 40, where the output of the phase detector is amplified and filtered and coupled to the voltage controlled oscillator 42. An incorrect colour burst phase from a Colorstripe™ signal causes a different voltage to appear at the output of the phase lock loop than would appear if the colour burst signal was not modified. The voltage level output of the phase lock loop is coupled to a sample and hold circuit 44 that detects the voltage difference and thus the presence or absence of the incorrect phase signals. The output of the sample and hold circuit is coupled to a switch 46 which disables the recording when the modified colour burst signal is present and enables the recording process when the colour burst signal is not modified. The switch 46 is inserted in the input bus leading to the recording device 20, and the disabling circuit 22 and/or the switch 46 may be located prior to or within the recording device 20.

## Claims

1. A method for processing a video signal to prevent the making of video recordings therefrom, wherein the video signal has unmodified colour burst signals and a colour burst signal containing a modified phase relationship in selected television lines, said method comprising the steps of:
receiving the video signal with the modified colour burst signal;
detecting the absence or presence of the modified colour burst signal in the television lines within a timing window which encompasses the colour burst signal;
generating a control signal (26) indicating the absence or presence of the modified colour burst signal in said lines of the video signal;
disabling the recording device (20) to prevent recording of television lines of the video signal when the control signal indicates the presence of the modified colour burst in the respective modified line of the video signal; and
enabling the recording device to allow recording of television lines when the control signal indicates the absence of the modified colour burst signal in the respective unmodified line of the video signal.

2. A method as claimed in claim 1, wherein said modified colour burst signal comprises a phase inversion of a selected portion of a colour burst in the modified line of the video signal.

3. A method as claimed in claim 1, wherein said modified colour burst signal comprises a colour burst signal beginning immediately following a trailing edge of a horizontal sync pulse and containing phase inversion of a selected portion of said colour burst in the modified line of the video signal.

4. A method as claimed in any preceding claim, further comprising the step of:
enabling a phase lock loop (38,40,42) during said timing window to detect phase differences in the colour burst signals between unmodified lines and modified lines.

5. A method as claimed in claim 4, further comprising the steps of:
generating a voltage difference indicative of said modified line; and
sampling the voltage of the phase lock loop to provide the control signal for disabling the recording device during said modified line when said voltage difference is detected.

6. A method as claimed in claim 5, further comprising the step of:
closing or opening a switching circuit in response to the control signal to allow or prevent recording of the unmodified or modified lines respectively.

7. A method for processing a video signal having an unmodified colour burst signal on selected television lines and a modified colour burst signal on selected lines in a field of the video signal, the method comprising the steps of:
phase detecting the colour burst signal of a single television line of the video signal;
generating a voltage difference indicative of the presence of the modified colour burst signal on said television line;
sampling the voltage difference to distinguish if the line contains the unmodified colour burst signals or the modified colour burst signal;
prohibiting a recording (16) of the modified television line in the field on a recording device (20) in response to the sampled voltage being indicative of the presence of a modified colour burst signal; and
enabling a recording of the unmodified television line in the field on the recording device in response to the sampled voltage being indicative of the presence of an unmodified colour burst signal.

8. A method as claimed in claim 7, further comprising the steps of:
providing a timing window signal which encompasses the duration of the modified colour burst signal; and
enabling the step of phase detecting in response to the timing window signal.

9. A method as claimed in claim 8, further comprising the steps of:
generating a first voltage during the timing window signal indicative of the presence of the modified colour burst signal; and
generating a second voltage during the timing window signal indicative of the absence of the modified colour burst signal.

## Patentansprüche

1. Verfahren zum Verarbeiten eines Videosignals, um das Erstellen von Videoaufzeichnungen daraus zu verhindern, wobei das Videosignal nicht-modifizierte Farbburstsignale sowie ein Farbburstsignal enthält, das eine modifizierte Phasenbeziehung in ausgewählten Fernseh-Zeilen enthält, wobei das Verfahren die Schritte umfasst:
Empfangen des Videosignals mit dem modifizierten Farbburstsignal;
Erfassen des Nicht-Vorhandenseins oder Vorhandenseins des modifizierten Farbburstsignals in den Fernseh-Zeilen in einem Zeitfenster, das das Farbburstsignal umgibt;
Erzeugen eines Steuersignals (26), das das Nicht-Vorhandensein oder Vorhandensein des modifizierten Farbburstsignals in den Zeilen des Videosignals angibt;
Deaktivieren der -Aufzeichnungsvorrichtung (20), um das Aufzeichnen von Fernseh-Zeilen des Videosignals zu verhindern, wenn das Steuersignal das Vorhandensein des modifizierten Farbburstsignals in der jeweiligen modifizierten Zeile des Videosignals angibt; und
Aktivieren der Aufzeichnungsvorrichtung, um das Aufzeichnen von Fernseh-Zeilen zu ermöglichen, wenn das Steuersignal das Nicht-Vorhandensein des modifizierten Farbburstsignals in der jeweiligen nicht-modifizierten Zeile des Videosignals angibt.

2. Verfahren nach Anspruch 1, bei dem das modifizierte Farbburstsignal eine Phasen-Inversion von einem ausgewählten Bereich von einem Farbburst in der modifizierten Zeile des Videosignals enthält.

3. Verfahren nach Anspruch 1, bei dem das modifizierte Farbburstsignal ein Farbburstsignal enthält, das unmittelbar folgend auf eine hintere Flanke von einem horizontalen Synchronisationsimpuls beginnt sowie eine Phasen-Inversion von einem ausgewählten Bereich von dem Farbburst in der modifizierten Zeile des Videosignals enthält.

4. Verfahren nach einem der vorhergehenden Ansprüche, außerdem mit dem Schritt:
Aktivieren eines Phasenregelkreises (38, 40, 42) während des Zeitfensters, um Phasendifferenzen in den Farbburstsignalen zwischen nicht-modifizierten Zeilen und modifizierten Zeilen zu erfassen.

5. Verfahren nach Anspruch 4, außerdem mit den Schritten:
Erzeugen einer Spannungsdifferenz, die die modifizierte Zeile angibt; und
Abtasten der Spannung des Phasenregelkreises, um das Steuersignal zur Verfügung zu stellen, um die Aufzeichnungsvorrichtung während der modifizierten Zeile zu deaktivieren, wenn die Spannungsdifferenz erfasst wird.

6. Verfahren nach Anspruch 5, außerdem mit dem Schritt:
Schließen oder öffnen eines Schaltungskreises in Reaktion auf das Steuersignal, um das Aufzeichnen von den nicht-modifizierten bzw. modifizierten Zeilen zu ermöglichen oder zu verhindern.

7. Verfahren zum Verarbeiten eines Videosignals, das ein nichtmodifiziertes Farbburstsignal in ausgewählten Fernseh-Zeilen sowie ein modifiziertes Farbburstsignal in ausgewählten Zeilen in einem Teilbild des Videosignals enthält, wobei das Verfahren die Schritte umfasst:
Phasen-Erfassung des Farbburstsignals einer einzelnen Fernseh-Zeile des Videosignals;
Erzeugen einer Spannungsdifferenz, die das Vorhandensein des modifizierten Farbburstsignals in der Fernseh-Zeile angibt;
Abtasten der Spannungsdifferenz, um zu unterscheiden, ob die Zeile die nicht-modifizierten Farbburstsignale oder das modifizierte Farbburstsignal enthält;
Verhindern einer Aufzeichnung (16) der modifizierten Fernseh-Zeile in dem Teilbild auf einer Aufzeichnungsvorrichtung (20) in Reaktion auf die abgetastete Spannung, die das Vorhandensein eines modifizierten Farbburstsignals angibt; und
Ermöglichen einer Aufzeichnung der nicht-modifizierten Fernseh-zeile in dem Teilbild auf der Aufzeichnungsvorrichtung in Reaktion auf die abgetastete Spannung, die das Vorhandensein eines nicht-modifizierten Farbburstsignals angibt.

8. Verfahren nach Anspruch 7, außerdem mit den Schritten:
Bereitstellen eines Zeitfenstersignals, das die Dauer des modifizierten Farbburstsignals umgibt; und
Ermöglichen des Schritts der Phasenerfassung in Reaktion auf das Zeitfenstersignal.

9. Verfahren nach Anspruch 8, außerdem mit den Schritten:
Erzeugen einer ersten Spannung während des Zeitfenstersignals, die das Vorhandensein des modifizierten Farbburstsignals angibt; und
Erzeugen einer zweiten Spannung während des Zeitfenstersignals, die das Nicht-Vorhandensein des modifizierten Farbburstsignals angibt.

## Revendications

1. Procédé pour traiter un signal vidéo afin d'empêcher la création d'enregistrements vidéo à partir de celui-ci, dans lequel le signal vidéo contient des signaux de salves de couleur non modifiées et un signal de salve de couleur contenant une relation de phase modifiée dans des lignes de télévision sélectionnées, ledit procédé comprenant les étapes consistant à :
recevoir le signal vidéo avec le signal de salve de couleur modifiée ;
détecter l'absence ou la présence du signal de salve de couleur modifiée dans les lignes de télévision à l'intérieur d'une fenêtre temporelle qui englobe le signal de salve de couleur,
générer un signal de commande (26) indiquant l'absence ou la présence du signal de salve de couleur modifiée dans lesdites lignes du signal vidéo,
désactiver le dispositif d'enregistrement (20) pour empêcher l'enregistrement de lignes de télévision du signal vidéo lorsque le signal de commande indique la présence de la salve de couleur modifiée dans la ligne modifiée respective du signal vidéo ; et
activer le dispositif d'enregistrement pour permettre l'enregistrement de lignes de télévision lorsque le signal de commande indique l'absence du signal de salve de couleur modifiée dans la ligne non modifiée respective du signal vidéo.

2. Procédé selon la revendication 1, dans lequel ledit signal de salve de couleur modifiée comprend une inversion de phase d'une partie modifiée d'une salve de couleur dans la ligne modifiée du signal vidéo.

3. Procédé selon la revendication 1, dans lequel ledit signal de salve de couleur modifiée comprend un signal de salve de couleur commençant immédiatement après un front arrière d'une impulsion de synchronisation horizontale et contenant une inversion de phase d'une partie sélectionnée de ladite salve de couleur dans la ligne modifiée du signal vidéo.

4. Procédé selon l'une quelconque des revendications précédentes, comprenant en outre l'étape consistant à :
permettre à une boucle de verrouillage de phase (38, 40, 42) de détecter, pendant ladite fenêtre temporelle, des différences de phase dans les signaux de salve de couleur entre des lignes non modifiées et des lignes modifiées.

5. Procédé selon la revendication 4, comprenant en outre les étapes consistant à :
générer une différence de tension représentative de ladite ligne modifiée ; et
échantillonner la tension de ladite boucle de verrouillage de phase pour fournir le signal de commande afin de désactiver le dispositif d'enregistrement pendant ladite ligne modifiée lorsque ladite différence de tension est détectée.

6. Procédé selon la revendication 5, comprenant en outre l'étape consistant à :
fermer ou ouvrir un circuit de commutation en réponse au signal de commande pour permettre ou empêcher respectivement l'enregistrement des lignes non modifiées ou modifiées.

7. Procédé de traitement d'un signal vidéo ayant un signal de salve de couleur non modifiée sur des lignes de télévision sélectionnées et un signal de salve de couleur modifiée sur une ligne sélectionnée dans un champ du signal vidéo, le procédé comprenant les étapes consistant à :
détecter la phase du signal de sortie de couleur d'une ligne de télévision unique du signal vidéo ;
générer une différence de tension représentative de la présence du signal de salve de couleur modifiée sur ladite ligne de télévision ;
échantillonner la différence de tension pour distinguer si la ligne contient les signaux de salve de couleur non modifiée ou le signal de salve de couleur modifiée ;
interdire un enregistrement (16) de la ligne de télévision modifiée dans le champ sur un dispositif d'enregistrement (20) en réponse au fait que la tension échantillonnée est représentative de la présence d'un signal de salve de couleur modifiée ; et
permettre un enregistrement de la ligne de télévision modifiée dans le champ sur le dispositif d'enregistrement en réponse au fait que la tension échantillonnée est représentative de la présence d'un signal de salve de couleur non modifiée.

8. Procédé selon la revendication 7, comprenant en outre les étapes consistant à :
prévoir un signal de fenêtre temporelle qui couvre la durée du signal de salve de couleur modifiée ; et
permettre l'étape de détection de phase en réponse au signal de fenêtre temporelle.

9. Procédé selon la revendication 8, comprenant en outre les étapes consistant à :
générer une première tension pendant le signal de fenêtre temporelle, représentative de la présence du signal de salve de couleur modifiée ; et
générer une seconde tension pendant le signal de fenêtre temporelle, représentative de l'absence du signal de salve de couleur modifiée.
